# EUROPEAN PATENT APPLICATION

(11) **EP 4 772 763 A1**
(43) Date of publication of application: **08.07.2026**
(21) Application number: 24859385.7
(22) Date of filing: 07.08.2024
(51) Int. Cl.: F16D 3/227

(54) **PLUNGING-TYPE CONSTANT VELOCITY UNIVERSAL JOINT AND WHEEL DRIVING DEVICE PROVIDED WITH SAME**

(30) Priority: 30.08.2023 JP 2023140134
(71) Applicant: NTN Corporation, Osaka-shi Osaka 530-0005 (JP)
(72) Inventor: SUZUKI, Daiki, Iwata-shi Shizuoka 438-8510 (JP); KOBAYASHI, Masazumi, Iwata-shi Shizuoka 438-8510 (JP); KOHARA, Mika, Iwata-shi Shizuoka 438-8510 (JP)
(74) Representative: Grünecker Patent- und Rechtsanwälte PartG mbB
(86) International application number: PCT/JP2024/028179
(87) International publication number: WO 2025/047345

(57) **Abstract**

In a double offset type constant velocity universal joint 1 provided in a power transmission system of a vehicle using an electric motor as a drive source, an axial gap (pocket gap) δ1 is formed between a pocket 12 of a cage 5 and a ball 4, and an axial gap δ2 of 0.6 mm or more is formed between a spherical portion 15 of an inner peripheral surface of the cage 5 and a spherical outer peripheral surface 8 of an inner joint member 3.

## Description

### TECHNICAL FIELD

The present invention relates to a plunging type constant velocity universal joint and a wheel driving device provided with the plunging type constant velocity universal joint.

### BACKGROUND ART

A constant velocity universal joint applied to a drive shaft or a propeller shaft of an automobile is roughly classified into a plunging type that allows both angular displacement and axial relative movement between two shafts, and a fixed type that allows angular displacement between two shafts but does not allow axial relative movement between two shafts.

As the plunging type constant velocity universal joint, a double offset type constant velocity universal joint (DOJ) using a ball as a rolling element for transmitting rotational torque and a tripod type constant velocity universal joint (TJ) using a roller as a rolling element are known. For example, Patent Literature 1 below discloses a double offset type constant velocity universal joint that is reduced in weight and size by increasing the number of balls from six to eight. Further, Patent Literature 2 below discloses a double offset type constant velocity universal joint in which a maximum operating angle is increased to 30° or more, to achieve further reduction in weight and size.

Compared to the tripod type constant velocity universal joint, the double offset type constant velocity universal joint has advantages that circumferential backlash is less, responsiveness is excellent, and manufacturing cost is inexpensive. Whereas, there are disadvantages that sliding resistance (slide resistance) is large, and vehicle vibration, particularly, vibration of an engine at a time of idling is easily transmitted. Therefore, in the double offset type constant velocity universal joint, various measures against idling vibration have been studied. For example, Patent Literature 3 below discloses a technique for absorbing idling vibration by providing a gap between an outer peripheral surface of an inner joint member and an inner peripheral surface of a cage.

### CITATIONS LIST

### PATENT LITERATURE

Patent Literature 1: JP H10-73129 A
Patent Literature 2: JP 2007-85488 A
Patent Literature 3: JP 2013-231518 A

### SUMMARY OF INVENTION

### TECHNICAL PROBLEMS

However, as ride comfort of vehicles is improved, noise, vibration, harshness (NVH) characteristics required for the constant velocity universal joint are becoming more severe. In the double offset type constant velocity universal joint, it is inevitable that sliding contact between components occurs due to the structure. Therefore, even if the measures as described in Patent Literature 3 are taken, it is difficult to reduce the slide resistance to the same level as that of the tripod type constant velocity universal joint in which components mainly contact each other by rolling. With such a problem of slide resistance, particularly a problem of idling vibration as a bottleneck, in recent years, an application range of the double offset type constant velocity universal joint is substantially limited to a portion (for example, a rear drive shaft) that is less susceptible to vibration of the engine.

Meanwhile, in recent years, electrification of vehicles has progressed, and there are increasing electric vehicles (hereinafter, referred to as EVs) that travel only by power of an electric motor, and hybrid vehicles (hereinafter, referred to as HEVs) that travel by power of an electric motor and an engine. Since an electric motor is superior in responsiveness to an engine, a constant velocity universal joint that transmits power of the electric motor is also required to have excellent responsiveness and less circumferential backlash. Further, vibration of the engine is not generated in the EVs, and the engine is basically stopped while traveling is stopped (during idling) in the REVs. Therefore, in these vehicles, the problem of the idling vibration, which is a main factor limiting the application of the double offset type constant velocity universal joint, does not occur. From the above viewpoint, in the EVs and the HEVs, as a plunging type constant velocity universal joint provided in a power transmission system such as a drive shaft and a propeller shaft, adoption of the double offset type having excellent responsiveness and less circumferential backlash has been studied.

Whereas, in the plunging type constant velocity universal joint, an axial load (induced thrust) is generated due to a frictional force between internal components when rotating at an operating angle. This induced thrust resonates with a vehicle body, which may cause various vibration problems such as lateral swaying at startup and muffled sound. Such a problem is particularly remarkable in EVs and HEVs which are excellent in quietness. Therefore, if the induced thrust can be reduced, there is a possibility that the double offset type constant velocity universal joint can be suitably used for the EVs and the REVs.

Therefore, an object of the present invention is to reduce induced thrust of the double offset type constant velocity universal joint and to enable the double offset type constant velocity universal joint to be suitably used for a power transmission system of a vehicle (an EV and an HEV) using an electric motor as a drive source.

### SOLUTIONS TO PROBLEMS

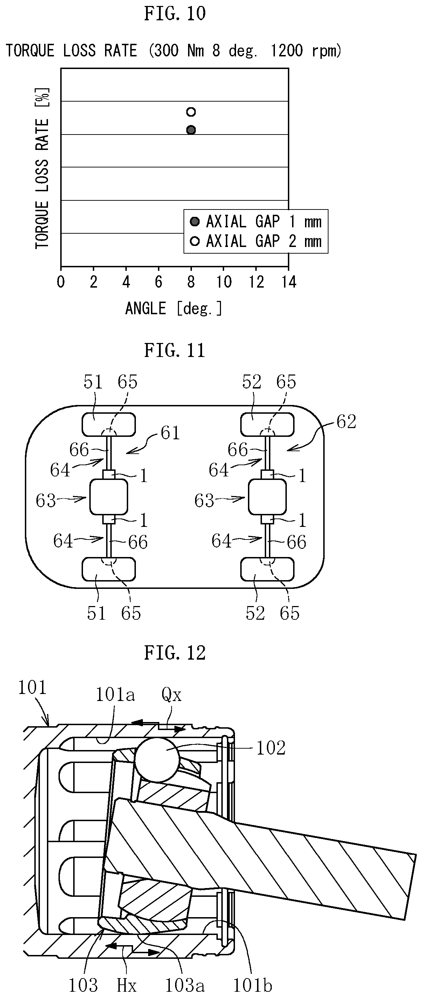

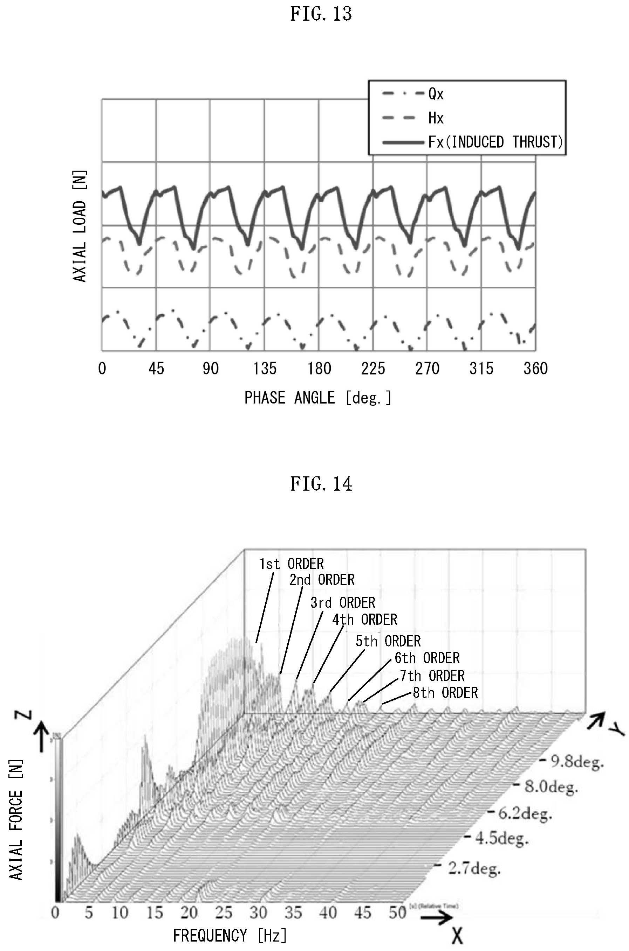

As described above, induced thrust is an axial load generated due to a frictional force between internal components of the plunging type constant velocity universal joint. Specifically, as illustrated in FIG. 12, a resultant force of an axial resistance Qx and an axial resistance Hx becomes the induced thrust. The axial resistance Qx is caused by a frictional force at a contact portion between a track groove 101a of an outer joint member 101 and a ball 102, and the axial resistance Hx is caused by a frictional force at a contact portion between an outer spherical surface 103a of a cage 103 and a cylindrical inner peripheral surface 101b of the outer joint member 101. FIG. 13 illustrates a result of obtaining, by mechanism analysis, induced thrust Fx (= Qx + Hx) of a double offset type constant velocity universal joint having eight balls. As illustrated in the figure, in the double offset type constant velocity universal joint, it has been considered that induced thrust having order components whose number is the same as the number of balls (eight in the figure) is mainly generated.

Whereas, FIG. 14 illustrates a result of measuring actual induced thrust of the double offset type constant velocity universal joint having eight balls. In this test, assuming that the vehicle starts, an axial load (induced thrust) applied to an outer joint member has been measured when an operating angle is changed from 0 deg to 12 deg at 10.7 deg/min while torque of 900 Nm is input to the outer joint member of the constant velocity universal joint at a rotational speed of 150 rpm. In FIG. 14, an X-axis indicates a frequency of vibration generated in the constant velocity universal joint, a Y-axis indicates an operating angle of the constant velocity universal joint, and a Z-axis indicates magnitude of an axial load (induced thrust) applied to the outer joint member. In the figure, a peak appearing at 2.5 Hz is a first-order component of the induced thrust (a vibration component generated once in one rotation of the constant velocity universal joint), a peak appearing at 5 Hz is a second-order component, a peak appearing at 7.5 Hz is a third-order component, ··· and a peak appearing at 20 Hz is an eighth-order component. From the actual measurement result illustrated in the figure, it can be confirmed that not only the eighth-order component but also many other order components are generated in the induced thrust, and in particular, the first-order component remarkably appears.

As described above, the following is considered as a cause of the occurrence of the induced thrust of various orders. As described above, the induced thrust Fx is the resultant force of the axial resistance Qx between the ball and the outer joint member and the axial resistance Hx between the cage and the outer joint member (see FIG. 12). Further, the axial resistances Qx and Hx are resultant forces of loads generated in respective phases. Note that "respective phases" are phases (in the case of the double offset type constant velocity universal joint having eight balls, the first to eighth phases) of respective balls and respective track grooves in contact with the balls at contact portions between the track grooves of the outer joint member and the balls. In the contact portions between the outer joint member and the cage, the "respective phases" are phases (in the case of the double offset type constant velocity universal joint having eight balls, the first to eighth phases) of respective spherical portions between the track grooves of the outer joint member and respective column portions between pockets of the cage in contact with the spherical portions.

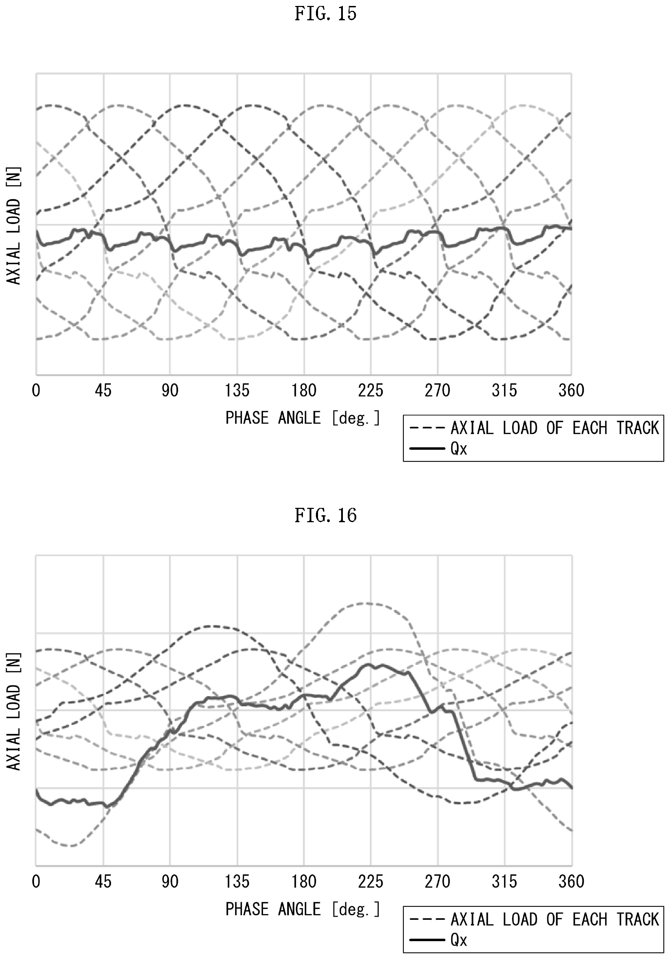

Here, in the double offset type constant velocity universal joint having eight balls, a mechanism analysis result of an axial load applied to the track groove of each phase of the outer joint member and a resultant force (Qx) thereof are illustrated in FIGS. 15 and 16. FIG. 15 illustrates an axial component of a track load of each phase and a resultant force thereof in an ideal state in which all the components have uniform dimensions and surface properties of all the phases are uniform. In this case, axial loads (see dotted lines) in the tracks of all the phases are uniform, and a resultant force of these has a regular shape in which a specific order component (the eighth-order component in the illustrated example) strongly appears (see a solid line). However, in practice, a contact state of internal components becomes non-uniform due to variations in dimensions of the individual component, variations in surface properties of the contact portions, and the like. Therefore, as illustrated in FIG. 16, the axial loads generated in the tracks of the respective phases vary (see dotted lines), and a resultant force thereof has an irregular shape (see a solid line). As a result, in the induced thrust (Fx = Qx + Hx), various order components including the first-order component (see FIG. 14) are generated. In this way, when the induced thrust of various order components is generated, the number of points of resonance with the vehicle body increases, and a possibility of causing noise and vibration problems becomes higher.

From the above viewpoint, the present inventors have considered that each order component of induced thrust can be suppressed by uniformizing axial loads generated in the respective phases of the double offset type constant velocity universal joint. Specifically, a structure is adopted in which (1) a gap in an axial direction is provided between a pocket of a cage and a ball, and (2) a gap in the axial direction is provided in a fitting portion between the cage and an inner joint member. The structure of these has been conventionally adopted as measures against idling vibration, and thus need not be adopted in EVs and HEVs in which no idling vibration problem occurs. However, according to verification by the present inventors, it has been revealed that each order component of induced thrust is reduced by individually providing axial play between the ball and the pocket of the cage and between the cage and the inner joint member as described above. This is considered to be because an imbalance of an axial load generated by variations in frictional forces in the respective phases is absorbed by the axial play of (1) and (2) described above, whereby the axial loads in the respective phases are made uniform.

As described above, the present invention provides a plunging type constant velocity universal joint to be provided in a power transmission system of a vehicle using an electric motor as a drive source, and the plunging type constant velocity universal joint includes: an outer joint member in which a plurality of track grooves having a linear shape are formed on a cylindrical inner peripheral surface; an inner joint member in which a plurality of track grooves having a linear shape are formed on a spherical outer peripheral surface; a plurality of balls disposed between the track grooves of the outer joint member and the track grooves of the inner joint member; and a cage having an outer peripheral surface on which a spherical portion in sliding contact with the cylindrical inner peripheral surface of the outer joint member is formed, an inner peripheral surface on which a spherical portion in sliding contact with the spherical outer peripheral surface of the inner joint member is formed, and a plurality of pockets that hold the plurality of balls, in which
an axial gap is formed between the pockets of the cage and the balls, and
an axial gap of 0.6 mm or more is formed between the spherical portion of the inner peripheral surface of the cage and the spherical outer peripheral surface of the inner joint member.

As described above, the plunging type constant velocity universal joint according to the present invention has a feature in which a structure conventionally adopted as measures against idling vibration is adopted in EVs and REVs (in particular, an EV driven only by an electric motor) in which an idling vibration problem does not occur. Specifically, by forming the axial gap between the pockets of the cage and the balls and providing the axial gap in the fitting portion between the cage and the inner joint member, it is possible to reduce each order component of the induced thrust. When the axial gap between the spherical portion of the inner peripheral surface of the cage and the spherical outer peripheral surface of the inner joint member is excessively small, an imbalance of axial loads at contact portions of the respective phases cannot be sufficiently absorbed. Therefore, the axial gap is set to 0.6 mm or more.

When the axial gap between the spherical portion of the inner peripheral surface of the cage and the spherical outer peripheral surface of the inner joint member is excessive, a balance of internal components is lost and a torque loss rate increases. Therefore, the axial gap is preferably set to 1.5 mm or less.

For example, by making a curvature radius of the spherical portion of the inner peripheral surface of the cage to be larger than a curvature radius of the spherical outer peripheral surface of the inner joint member, the axial gap can be provided in the fitting portion between the cage and the inner joint member.

Alternatively, by providing the inner peripheral surface of the cage with: a cylindrical surface parallel to an axial center; and the spherical portion that is provided on both axial sides of the cylindrical surface and is smoothly continuous with the cylindrical surface, the axial gap can be provided in the fitting portion between the cage and the inner joint member.

In a case where surfaces of the track grooves and the cylindrical inner peripheral surface of the outer joint member are forged surfaces, and surfaces of the track grooves of the inner joint member are also forged surfaces, roughness of these surfaces increases, so that variations in axial loads of the respective phases tend to increase. In this case, as described above, it is particularly effective to provide the axial gaps between the balls and the pockets of the cage and between the cage and the inner joint member, to absorb variations in axial loads of the respective phases.

The plunging type constant velocity universal joint described above can be suitably incorporated in a wheel driving device using an electric motor as a drive source. Specifically, it is possible to obtain a wheel driving device including an electric motor, a wheel, and a power transmission system that transmits a driving force of the electric motor to the wheel via the above-described plunging type constant velocity universal joint.

### ADVANTAGEOUS EFFECTS OF INVENTION

As described above, according to the present invention, it is possible to reduce the induced thrust of the double offset type constant velocity universal joint having less backlash and excellent responsiveness, and thus the double offset type constant velocity universal joint can be suitably used for a power transmission system of an EV or an HEV.

### BRIEF DESCRIPTION OF DRAWINGS

FIG. 1 is an axial cross-sectional view of a double offset type constant velocity universal joint according to an embodiment of the present invention.
FIG. 2 is a cross-sectional view of the constant velocity universal joint of FIG. 1 in an axis orthogonal direction.
FIG. 3 is an enlarged cross-sectional view of an inner joint member and a cage of the constant velocity universal joint of FIG. 1.
FIG. 4 is an enlarged view of a portion C in FIG. 3.
FIG. 5 is an enlarged view of a portion D in FIG. 3.
FIG. 6 is a cross-sectional view illustrating an example of a specification of a fitting portion between the inner joint member and the cage in FIG. 3.
FIG. 7 is a cross-sectional view illustrating another example of a specification of the fitting portion between the inner joint member and the cage in FIG. 3.
FIG. 8 is a diagram illustrating a measurement result of induced thrust in an example (axial gap δ2 = 1 mm).
FIG. 9 is a diagram illustrating a measurement result of induced thrust in a comparative example (axial gap δ2 = 0.5 mm).
FIG. 10 is a diagram illustrating a change in torque loss rate when the axial gap δ2 is made different.
FIG. 11 is a plan view of an electric vehicle (EV) on which the constant velocity universal joint of FIG. 1 is mounted.
FIG. 12 is a cross-sectional view illustrating a portion to which an axial load is applied when the double offset type constant velocity universal joint rotates at an operating angle.
FIG. 13 is a diagram illustrating an analysis result of induced thrust of the double offset type constant velocity universal joint.
FIG. 14 is a diagram illustrating an actual measurement result of induced thrust of the double offset type constant velocity universal joint.
FIG. 15 is a diagram illustrating an analysis result of an axial load applied to a track groove of an outer joint member (when axial loads applied to the track grooves of the respective phases are uniform).
FIG. 16 is a diagram illustrating an analysis result of an axial load applied to the track groove of the outer joint member (when axial loads applied to the track grooves of the respective phases are non-uniform).

### DESCRIPTION OF EMBODIMENT

An embodiment of a plunging type constant velocity universal joint according to the present invention will be described in detail below with reference to the drawings.

FIG. 11 illustrates an electric vehicle (EV) that travels only by power of an electric motor. The electric vehicle includes a front-side wheel driving device 61 that drives front wheels 51 and a rear-side wheel driving device 62 that drives rear wheels 52. Each of the wheel driving devices 61 and 62 includes a drive unit 63 including an electric motor, and drive shafts 64 as a power transmission system that transmits a driving force of the electric motor to the front wheels 51 or the rear wheels 52. In the illustrated example, the drive unit 63 of the front-side wheel driving device 61 is connected to the left and right front wheels 51 via the left and right drive shafts 64, and the drive unit 63 of the rear-side wheel driving device 62 is connected to the left and right rear wheels 52 via the left and right drive shafts 64.

Each drive shaft 64 includes, for example, a plunging type constant velocity universal joint 1 provided on an inboard side (drive unit 63 side), a fixed type constant velocity universal joint 65 provided on an outboard side (wheels 51 and 52 side), and an intermediate shaft 66 connecting the two constant velocity universal joints 1 and 65. A double offset type constant velocity universal joint according to an embodiment of the present invention is applied as the plunging type constant velocity universal joint 1. Hereinafter, a configuration of the plunging type constant velocity universal joint 1 will be described in detail.

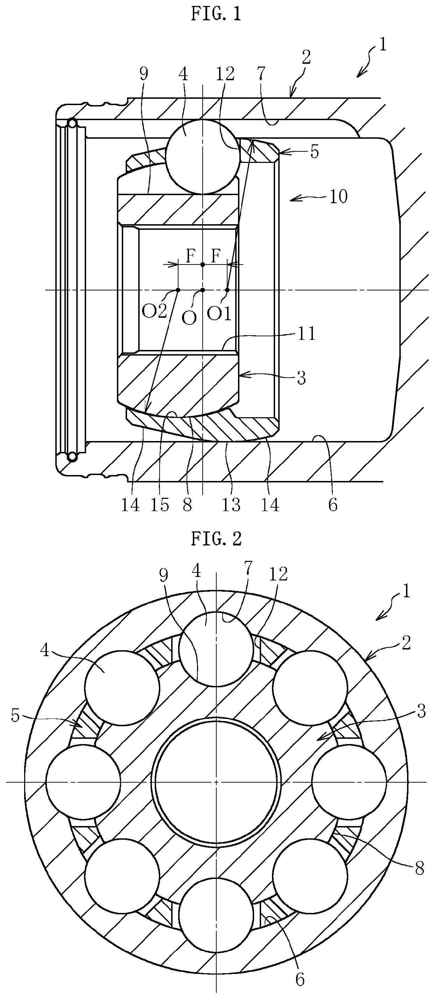

As illustrated in FIGS. 1 and 2, the plunging type constant velocity universal joint 1 of the present embodiment includes a cup-shaped outer joint member 2 having one end (left end in FIG. 1) opened in an axial direction, an inner joint member 3 disposed on an inner periphery of the outer joint member 2, a plurality of balls 4, and a cage 5 that holds the plurality of balls 4. An internal component 10 including the inner joint member 3, the balls 4, and the cage 5 is accommodated in the inner periphery of the outer joint member 2 so as to be axially displaceable. An end portion of the intermediate shaft 66 (see FIG. 11) is coupled to a shaft hole 11 of the inner joint member 3 by spline fitting. In the following description, in a state where an operating angle is 0° as illustrated in FIG. 1, an axial center direction of the outer joint member 2 and the inner joint member 3 is referred to as an "axial direction", a bottom portion side (right side in FIG. 1) of the outer joint member 2 in the axial direction is referred to as a "joint depth side", and an opening side (left side in FIG. 1) of the outer joint member 2 is referred to as a "joint opening side".

On a cylindrical inner peripheral surface 6 of the outer joint member 2, linear track grooves 7 extending in the axial direction are formed at a plurality of positions in a circumferential direction at equal intervals. On a spherical outer peripheral surface 8 of the inner joint member 3, linear track grooves 9 extending in the axial direction are formed at a plurality of positions in a circumferential direction at equal intervals. The balls 4 are disposed one by one between the track groove 7 of the outer joint member 2 and the track groove 9 of the inner joint member 3 which are facing each other in a radial direction, and the balls 4 transmit rotational torque between the two joint members 2 and 3.

The cage 5 is provided with a plurality of pockets 12, and each pocket 12 holds one ball 4. On an outer peripheral surface of the cage 5, a spherical portion 13 that slides on the cylindrical inner peripheral surface 6 of the outer joint member 2 is formed, and tapered surfaces 14 provided on both axial sides of the spherical portion 13 are formed. On an inner peripheral surface of the cage 5, a spherical portion 15 that slides on the spherical outer peripheral surface 8 of the inner joint member 3 is formed. In the present embodiment, as illustrated in FIG. 2, the numbers of the track grooves 7 and 9, the balls 4, and the pockets 12 are eight each. However, without limiting to this, the numbers of the track grooves 7 and 9, the balls 4, and the pockets 12 may be six each, for example.

In the cage 5, a curvature center O1 of the spherical portion 13 on the outer peripheral surface and a curvature center O2 (that is, a curvature center of the spherical outer peripheral surface 8 of the inner joint member 3) of the spherical portion 15 on the inner peripheral surface are offset by an equal distance F to opposite sides in the axial direction with respect to a joint center O (intersection of a plane passing through centers of all the balls 4 and an axial center of the two joint members 2 and 3) (see FIG. 1). In the illustrated example, the curvature center O1 of the spherical portion 13 on the outer peripheral surface of the cage 5 is offset toward the joint depth side with respect to the joint center O, and the curvature center O2 of the spherical portion 15 on the inner peripheral surface of the cage 5 is offset toward the joint opening side with respect to the joint center O. As a result, when an operating angle is provided between the outer joint member 2 and the inner joint member 3, the ball 4 held in the pocket 12 of the cage 5 is always maintained in a bisecting plane of the operating angle at any operating angle, thereby ensuring a constant velocity between the outer joint member 2 and the inner joint member 3. Further, the ball 4 held by the cage 5 rolls on the track groove 7 of the outer joint member 2, so that the internal component 10 is axially movable with respect to the outer joint member 2. Note that, contrary to the above, the curvature center O1 of the spherical portion 13 of the outer peripheral surface of the cage 5 may be disposed on the joint opening side, and the curvature center O2 of the spherical portion 15 of the inner peripheral surface of the cage 5 may be disposed on the joint depth side.

The outer joint member 2 is manufactured through a forging step, a turning step, a rolling step, a heat treatment step, and a grinding step. In the forging step, an outer joint member original shape is molded. In the turning step, an outer peripheral surface of the outer joint member original shape is turned. In the rolling step, a male spline is formed on a shaft portion of the outer joint member original shape. In the heat treatment step, heat treatment (for example, high-frequency quenching and tempering) is applied to the outer joint member original shape. In the grinding step, the outer peripheral surface of the outer joint member original shape is ground. When manufactured by such a procedure, the cylindrical inner peripheral surface 6 and the track groove 7 of the outer joint member 2 are to be forged surfaces.

The inner joint member 3 is manufactured through a forging step, a turning step, a broaching step, a heat treatment step, and a grinding step. In the forging step, an inner joint member original shape having a substantially cylindrical shape is molded. In the turning step, an inner peripheral surface and an outer peripheral surface of the inner joint member original shape are turned. In the broaching step, a female spline is formed on the inner periphery of the inner joint member original shape. In the heat treatment step, heat treatment (for example, carburizing, quenching, and tempering) is applied to the inner joint member original shape. In the grinding step, the spherical outer peripheral surface (region excluding the track groove) of the inner joint member original shape is ground. When manufactured by such a procedure, the spherical outer peripheral surface 8 of the inner joint member 3 is to be a ground surface, the track groove 9 is to be a forged surface, and the inner peripheral surface (female spline) is to be a cut surface.

The cage 5 is manufactured through a forging step, a turning step, a pocket punching step, a heat treatment step, and a grinding step. In the forging step, a cage original shape having a substantially cylindrical shape is molded. In the turning step, an inner peripheral surface and an outer peripheral surface of the cage original shape are turned. In the pocket punching step, the cage original shape is punched in a radial direction to form the pocket 12. In the heat treatment step, the cage original shape is subjected to heat treatment (for example, carburizing, quenching, and tempering). In the grinding step, the spherical portion 13 of the outer peripheral surface, the spherical portion 15 of the inner peripheral surface, and a portion (surfaces facing each other in the axial direction) of the inner surface of the pocket 12 of the cage original shape are ground. When manufactured by such a procedure, the spherical portion 13 of the outer peripheral surface, the spherical portion 15 of the inner peripheral surface, and the portion of the inner surface of the pocket 12 of the cage 5 are to be ground surfaces, and other regions are to be a pocket punching surface or a turned surface.

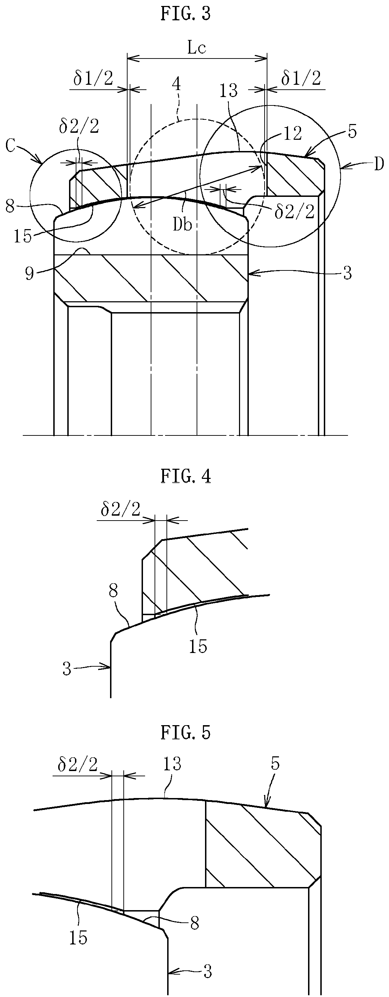

As illustrated in FIG. 3, an axial gap (hereinafter, this axial gap is referred to as a "pocket gap δ1") is provided between a wall surface of the pocket 12 of the cage 5 and the ball 4. Assuming that an axial dimension of the pocket 12 of the cage 5 is Lc and a ball diameter of the ball 4 is Db, the pocket gap δ1 is expressed by δ1 = Lc - Db.

The pocket gap δ1 is preferably set to 0.001 to 0.05 mm. As long as the pocket gap δ1 is provided even slightly, the effect can be exhibited. In addition, if the pocket gap δ1 is larger than 0.05 mm, an amount of displacement of the ball 4 from the bisecting plane of the operating angle increases, which may lead to deterioration of the constant velocity and durability of the plunging type constant velocity universal joint 1.

As illustrated in an enlarged manner in FIGS. 4 and 5, an axial gap δ2 is provided between the spherical portion 15 of the inner peripheral surface of the cage 5 and the spherical outer peripheral surface 8 of the inner joint member 3. The axial gap δ2 is a relative movement amount in the axial direction of the inner joint member 3 with respect to the cage 5, from a position where the inner joint member 3 is moved to one side in the axial direction with respect to the cage 5 to bring the spherical outer peripheral surface 8 of the inner joint member 3 into contact with the spherical portion 15 of the inner peripheral surface of the cage 5 to a position where the inner joint member 3 is moved to another side in the axial direction with respect to the cage 5 to bring the spherical outer peripheral surface 8 of the inner joint member 3 into contact with the spherical portion 15 of the inner peripheral surface of the cage 5.

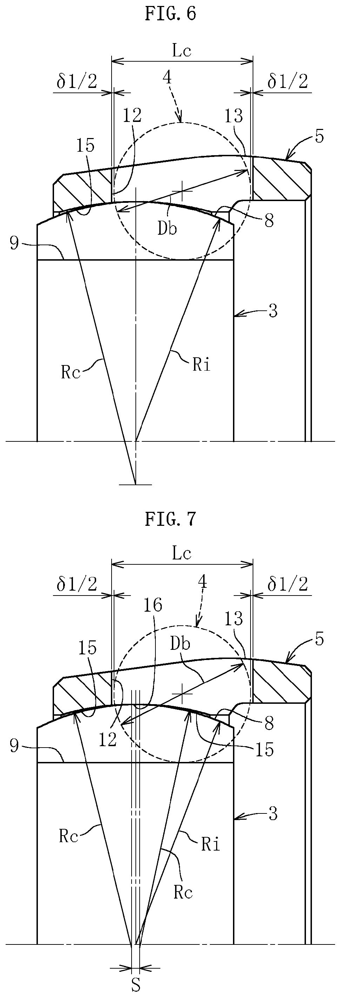

A specific specification for providing the axial gap δ2 described above will be described with reference to FIG. 6. In this specification, a curvature radius Rc of the spherical portion 15 of the inner peripheral surface of the cage 5 is larger than a curvature radius Ri of the spherical outer peripheral surface 8 of the inner joint member 3, and a curvature center of the curvature radius Rc is radially offset from an axial center of the cage 5. The radial gap between the spherical outer peripheral surface 8 of the inner joint member 3 and the spherical portion 15 of the inner peripheral surface of the cage 5 is minimized at an outermost diameter portion (a middle in the axial direction) of the spherical portion 15 of the cage 5, and gradually increases from the outermost diameter portion toward both axial sides. The radial gap between the outermost diameter portion of the spherical portion 15 of the cage 5 and the spherical outer peripheral surface 8 of the inner joint member 3 is substantially 0, but a slight radial gap is provided to allow the relative movement between the outermost diameter portion and the spherical outer peripheral surface 8. As a result, the axial gap δ2 that allows relative axial movement between the cage 5 and the inner joint member 3 is provided between the cage 5 and the inner joint member 3.

FIG. 7 illustrates another specification for providing the axial gap δ2. In this specification, the spherical outer peripheral surface 8 of the inner joint member 3 is formed by a single spherical surface having the curvature radius Ri as in FIG. 6. Whereas, a cylindrical portion 16 parallel to the axial center of the cage 5 is formed on the inner peripheral surface of the cage 5, and the spherical portion 15 having the curvature radius Rc is smoothly connected to both axial ends of the cylindrical portion 16. The curvature radius Rc of the spherical portion 15 of the inner peripheral surface of the cage 5 and the curvature radius Ri of the spherical outer peripheral surface 8 of the inner joint member 3 are substantially Rc ≈ Ri although there is a slight spherical gap for slide guiding. In this specification, the spherical outer peripheral surface 8 of the inner joint member 3 is slidingly guided in the axial direction by the cylindrical portion 16 of the inner peripheral surface of the cage 5, so that the inner joint member 3 can move in the axial direction by an amount of an axial dimension S of the cylindrical portion 16 with respect to the cage 5. That is, the axial dimension S of the cylindrical portion 16 is the axial gap δ2 between the cage 5 and the inner joint member 3.

When a rotational driving force from the electric motor is input to the outer joint member 2 in a state where the plunging type constant velocity universal joint 1 described above takes an operating angle, torque is transmitted to the inner joint member 3 via the cage 5 and the ball 4. At this time, an axial load (induced thrust) is generated in the outer joint member 2 due to generation of axial sliding resistance at the contact portion between individual components, but the axial loads in the respective phases are not uniform but vary due to variations in dimensions and surface properties of the components. In the present embodiment, as described above, the pocket gap δ1 in the axial direction is provided between the wall surface of the pocket 12 of the cage 5 and the ball 4 in the axial direction, and the axial gap δ2 is provided between the spherical portion 15 of the inner peripheral surface of the cage 5 and the spherical outer peripheral surface 8 of the inner joint member 3. The pocket gap δ1 and the axial gap δ2 absorb variations in axial loads in the respective phases, so that the axial loads in the respective phases are made uniform, and thus each order component of the induced thrust can be suppressed.

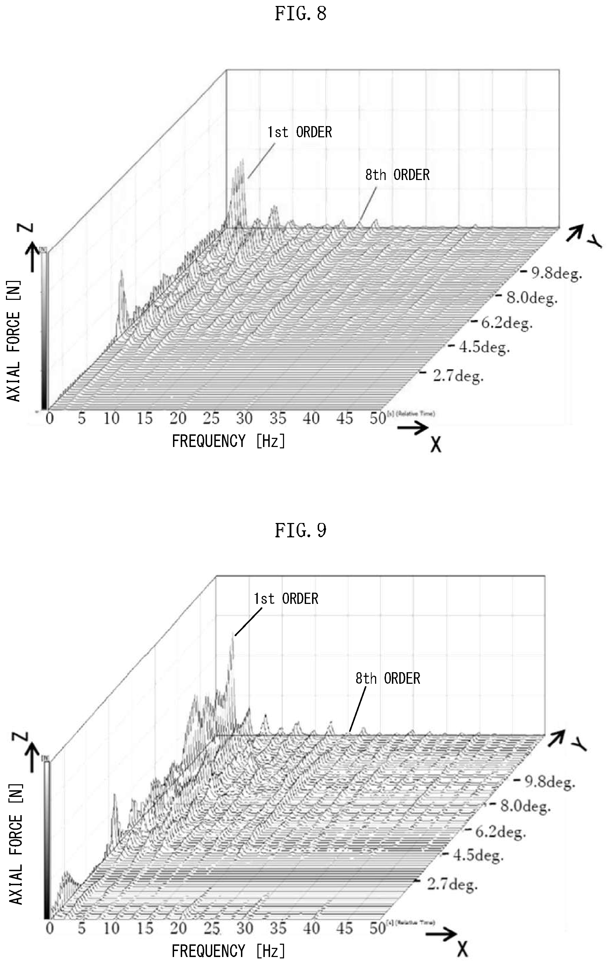

FIG. 8 illustrates a measurement result of induced thrust generated in the plunging type constant velocity universal joint 1 (example) in which the axial gap δ2 is 1 mm. The measurement conditions were the same as those in the test of FIG. 14, and specifically, an axial load (induced thrust) applied to the outer joint member was measured when the operating angle was changed from 0 deg to 12 deg at 10.7 deg/min while torque of 900 Nm was input at a rotational speed of 150 rpm. As described above, by providing the axial gap δ2 between the cage 5 and the inner joint member 3, it can be confirmed that magnitude of each order component of the induced thrust is smaller than a measurement result (see FIG. 14) when the axial gap δ2 is substantially 0.

Whereas, FIG. 9 illustrates a measurement result of induced thrust generated in the plunging type constant velocity universal joint 1 (comparative example) having the axial gap δ2 of 0.5 mm. The measurement conditions are the same as those in the test of FIG. 14. In this case, magnitude of each order component of the induced thrust is slightly smaller than that of the measurement result (see FIG. 14) of a case where the axial gap δ2 is substantially 0, but each order component (particularly, the first-order component) of the induced thrust is larger than that of the measurement result (see FIG. 8) of a case where the axial gap δ2 is 1 mm. Therefore, it cannot be said that the effect of reducing the induced thrust is sufficient. From the above results, the axial gap δ2 is set to 0.6 mm or more.

In addition, if the axial gap δ2 is too large, backlash inside the plunging type constant velocity universal joint 1 becomes excessive, a balance inside is lost, and a torque loss rate increases. For example, FIG. 10 illustrates an analysis result of a torque loss rate when the operating angle is 8 deg (normal operating angle) and input torque is 300 N·m at a rotational speed of 1200 rpm assuming high-speed traveling. As illustrated in the figure, in a case where the axial gap δ2 is 2 mm (white circle), the torque loss rate is larger than that of a case where the axial gap δ2 is 1 mm (black circle). From the above results, a larger axial gap δ2 is not necessarily better, and it is preferable to set the axial gap δ2 to, for example, 1.5 mm or less.

The present invention is not limited to the embodiment described above. Hereinafter, another embodiment of the present invention will be described, but redundant description of the same points as those of the embodiment described above will be omitted.

In the plunging type constant velocity universal joint 1 described above, components (the outer joint member 2, the inner joint member 3, and the cage 5) other than the balls 4 may be subjected to surface treatment. Specifically, surface treatment such as manganese phosphate treatment or shot blasting may be performed on at least one face of the cylindrical inner peripheral surface 6 of the outer joint member 2, a surface of the track groove 7 of the outer joint member 2, the spherical outer peripheral surface 8 of the inner joint member 3, a surface of the track groove 9 of the inner joint member 3, the spherical portion 13 of the outer peripheral surface of the cage 5, and the spherical portion 15 of the inner peripheral surface of the cage 5.

The face subjected to the surface treatment described above satisfies at least one of Rsk being a negative value or Rp being 2 or less. In addition to the above conditions, it is desirable to satisfy at least one of Ra being 1.5 or less, preferably 0.6 or less, and Rz being 10 or less, preferably 6 or less.

Note that Rsk, Rp, Ra, and Rz are a skewness, a maximum crest height, an arithmetic average height, and a maximum height of a roughness curve of a reference length defined in JIS B 0601-2013, respectively. Rsk is a positive value when the amplitude distribution curve has many crests, and is a negative value when the amplitude distribution curve has many valleys, with respect to an average line of the roughness curve. Measurement of these parameters is performed at each inter-component contact position, and is performed in a range of a total of 4 mm of the reference length of 0.8 mm × 5 sections provided along the axial direction.

In addition, the track groove 7 and the cylindrical inner peripheral surface 6 of the outer joint member 2 and the track groove 9 of the inner joint member 3 are generally finished by forging as described above in order to suppress the manufacturing cost, but may be finished by cutting processing or grinding processing after heat treatment (quenching). Further, the outer peripheral surface and the inner peripheral surface of the cage 5 are generally subjected to grinding finish as described above, but may be finished by cutting processing or rolling processing after heat treatment (quenching).

Further, the double offset type constant velocity universal joint according to the present invention is not limited to the electric vehicle (EV) that travels only by the driving force of the electric motor, and can also be applied to a power transmission system of a hybrid vehicle (HEV) that travels by the power of the electric motor and the engine.

### REFERENCE SIGNS LIST

- 1: Plunging type constant velocity universal joint (double offset type constant velocity universal joint)
- 2: Outer joint member
- 3: Inner joint member
- 4: Ball
- 5: Cage
- 6: Cylindrical inner peripheral surface
- 7: Track groove
- 8: Spherical outer peripheral surface
- 9: Track groove
- 10: Internal component
- 12: Pocket
- 13: Spherical portion
- 14: Tapered surface
- 15: Spherical portion
- 16: Cylindrical portion
- 51: Front wheel
- 52: Rear wheel
- 61, 62: Wheel driving device
- 63: Drive unit
- 64: Drive shaft (power transmission system)
- 65: Fixed type constant velocity universal joint
- 66: Intermediate shaft
- O: Joint center
- O1: Curvature center of spherical portion of outer peripheral surface of cage
- O2: Curvature center of spherical portion of inner peripheral surface of cage
- Fx: Induced thrust
- Qx: Axial resistance between outer joint member and ball
- Hx: Axial resistance between outer joint member and cage
- δ1: Axial gap (pocket gap) between pocket and ball
- δ2: Axial gap between cage and inner joint member

## Claims

1. A plunging type constant velocity universal joint to be provided in a power transmission system of a vehicle using an electric motor as a drive source, the plunging type constant velocity universal joint comprising:
an outer joint member in which a plurality of track grooves having a linear shape are formed on a cylindrical inner peripheral surface;
an inner joint member in which a plurality of track grooves having a linear shape are formed on a spherical outer peripheral surface;
a plurality of balls disposed between the track grooves of the outer joint member and the track grooves of the inner joint member; and
a cage having an outer peripheral surface on which a spherical portion in sliding contact with the cylindrical inner peripheral surface of the outer joint member is formed, an inner peripheral surface on which a spherical portion in sliding contact with the spherical outer peripheral surface of the inner joint member is formed, and a plurality of pockets that hold the plurality of balls, wherein
an axial gap is formed between the pockets of the cage and the balls, and
an axial gap of 0.6 mm or more is formed between the spherical portion of the inner peripheral surface of the cage and the spherical outer peripheral surface of the inner joint member.

2. The plunging type constant velocity universal joint according to claim 1, wherein the axial gap between the spherical portion of the inner peripheral surface of the cage and the spherical outer peripheral surface of the inner joint member is 1.5 mm or less.

3. The plunging type constant velocity universal joint according to claim 1, wherein a curvature radius of the spherical portion of the inner peripheral surface of the cage is larger than a curvature radius of the spherical outer peripheral surface of the inner joint member.

4. The plunging type constant velocity universal joint according to claim 1, wherein the inner peripheral surface of the cage includes: a cylindrical surface parallel to an axial center; and the spherical portion that is provided on both axial sides of the cylindrical surface and is smoothly continuous with the cylindrical surface.

5. The plunging type constant velocity universal joint according to claim 1, wherein surfaces of the track grooves and the cylindrical inner peripheral surface of the outer joint member are forged surfaces, and surfaces of the track grooves of the inner joint member are also forged surfaces.

6. The plunging type constant velocity universal joint according to claim 1, wherein the plunging type constant velocity universal joint is provided in a power transmission system of a vehicle using only the electric motor as a drive source.

7. A wheel driving device comprising: the electric motor; a wheel; and the power transmission system configured to transmit a driving force of the electric motor to the wheel via the plunging type constant velocity universal joint according to claim 1.
